# EUROPÄISCHE PATENTSCHRIFT

(11) **EP 2 646 274 B1**
(45) Veröffentlichungstag und Bekanntmachung des Hinweises auf die Patenterteilung: **08.05.2019**
(21) Anmeldenummer: 11776104.9
(22) Anmeldetag: 21.10.2011
(51) Int. Cl.: B60L 11/18, B62H 1/02, B62M 6/40, B62M 6/80

(54) **FAHRZEUG MIT ENERGIESPEICHER**
VEHICLE HAVING AN ENERGY STORE
VÉHICULE DOTÉ D'UN ACCUMULATEUR D'ÉNERGIE

(30) Priorität: 02.12.2010 DE 102010053011
(43) Veröffentlichungstag der Anmeldung: 09.10.2013
(73) Patentinhaber: SEW-EURODRIVE GmbH & Co. KG, 76646 Bruchsal (DE)
(72) Erfinder: SCHWESINGER, Klaus, 76646 Bruchsal (DE)
(86) Internationale Anmeldenummer: PCT/EP2011/005329
(87) Internationale Veröffentlichungsnummer: WO 2012/072167

(56) Entgegenhaltungen:
- EP-A1- 0 902 523
- JP-A- 10 075 535
- JP-A- 10 215 532
- JP-A- 10 250 675

## Beschreibung

Die Erfindung betrifft ein Fahrzeug mit Energiespeicher.

Es ist bekannt, bei Fahrrädern einen aktivierbaren Standfuß vorzusehen, der durch Drehbewegung aktivierbar ist. Hierbei ist das Fahrrad stabilisiert durch den Standfuß, so dass ein Abstellen des Fahrrades auf einer Bodenfläche ohne weitere Mittel ermöglicht ist.

Aus der gattungsgemäßen EP 0 902 523 A1 ist ein Ladesystem für ein Fahrrad bekannt.

Aus der JP 10 075535 A ist ein Ladesystem für ein Elektrofahrzeug bekannt.

Aus der JP 10 250675A ist ein kontaktloses Laden eines Elektrofahrrades bekannt.

Aus der JP 10 215532 A ist ein Ladesystem für ein Fahrzeug bekannt.

Der Erfindung liegt daher die Aufgabe zugrunde, ein Fahrrad mit Energiespeicher weiterzubilden.

Erfindungsgemäß wird die Aufgabe bei dem Fahrrad nach den in Anspruch 1 angegebenen Merkmalen gelöst.

Wichtige Merkmale der Erfindung bei dem Fahrzeug mit Energiespeicher sind, dass am Fahrzeug ein Standfuß angeordnet ist, wobei der Standfuß eine Sekundärwicklung aufweist, aus der dem Energiespeicher des Fahrzeugs Energie zuführbar ist,
wobei im von der Sekundärwicklung umwickelten Bereich ein Zentralstab zur Durchleitung von Kraft, also zur Durchleitung eines Anteils der Gewichtskraft des Fahrzeugs, angeordnet ist.

Von Vorteil ist dabei, dass Energie beim Abstellen des Fahrzeugs berührungslos übertragbar ist ans Fahrzeug. Somit ist die Parkzeit nutzbar zum Aufladen des Energiespeichers. Wichtig ist außerdem, dass die Kraftdurchleitung vom Zentralstab ausführbar ist und somit weitere Mittel, wie Ferritteile, mechanisch entlastet sind. Außerdem ist ein Abtransport von Wärme aus dem von der Sekundärwicklung umgebenen Bereich ermöglicht, insbesondere ist die von Ferritteilen erzeugte Wärme, beispielsweise durch die durch Ummagnetisieren erzeugte Wärme, abtransportierbar.

Bei einer vorteilhaften Ausgestaltung ist der Zentralstab aus Stahl, insbesondere aus ferromagnetischem Stahl, oder Leichtmetall, wie Aluminium, gefertigt. Von Vorteil ist dabei, dass ein elektrisch leitfähiges Material verwendbar ist, in welchem bei Anwesenheit von Magnetfeldern Wirbelströme ausbildbar sind. Insbesondere durch die mittige Anordnung des Zentralstabs wird es ermöglicht, dass Ferritmaterial den Zentralstab umgibt und somit die Ausbildung von Wirbelströmen vermieden wird, solange das Ferritmaterial nicht in Sättigung betrieben wird.

Bei einer vorteilhaften Ausgestaltung ist der Standfuß drehbar und/oder linear bewegbar am Fahrzeug, insbesondere am Rahmen des Fahrzeugs angeordnet, so dass der Standfuß aktivierbar ist durch Drehen und/oder lineares Bewegen relativ zum Rahmen des Fahrzeugs. Von Vorteil ist dabei, dass der Standfuß in einfacher Weise aktivierbar ist, also mittels eines Drehlagers und/oder eines Linearlagers.

Bei der erfindungsgemäßen Ausgestaltung ist das Fahrzeug ein Einrad oder Zweirad, insbesondere ein elektrisch angetriebenes Zweirad. Von Vorteil ist dabei, dass das Fahrzeug nicht ohne weitere Hilfsmittel abstellbar ist. Denn die Stabilisierung des Fahrzeugs erfolgt nur bei der Bewegung des Fahrzeuges durch das auftretende Drehmoment und die aktive Steuerung des Fahrers. Beim Abstellen des Fahrzeugs ist diese Stabilisierung nicht mehr vorhanden und der Standfuß erzeugt die Stabilität. Gleichzeitig ermöglicht er aber auch die Beladung des Energiespeichers aus der Bodenfläche heraus. Der Zentralstab leitet die Gewichtskraftanteile, welche zur Stabilisierung notwendig sind, durch das umwickelte Spuleninnere vom Bereich des Bodens zum Fahrzeugrahmen beziehungswiese dem an diesem angeordneten Drehlager und/oder Linearlager.

Bei der erfindungsgemäßen Ausgestaltung sind radial zwischen Zentralstab und Sekundärwicklung Ferritteile, insbesondere Ferritstäbe angeordnet. Von Vorteil ist dabei, dass eine verbesserte Kopplung zwischen Sekundärwicklung und Primärleitersystem erreichbar ist und somit ein höherer Wirkungsgrad.

Bei einer vorteilhaften Ausgestaltung berührt der Zentralstab die Innenwandung einer Schutzkappe oder mittels des Zentralstabes ist der Boden berührbar, insbesondere im aktivierten Zustand des Standfusses. Von Vorteil ist dabei, dass der Zentralstab die Durchleitung der mechanischen Kräfte zur Stabilisierung des Fahrzeugs ermöglicht. Dabei ist am äußeren Umfang des Standfußes die Schutzkappe und das Gehäuseteil vorsehbar zum gehäusebildenden Umgeben der umfassten Teile. Die Schutzkappe ist hierbei aus einem stark belastbaren Material herstellbar, so dass eine hohe Standzeit erreichbar ist.

Bei einer vorteilhaften Ausgestaltung ist die Sekundärwicklung mittels Vergussmasse stoffschlüssig mit dem Zentralstab und/oder Ferritstäben verbunden. Von Vorteil ist dabei, dass die Sekundärwicklung geschützt und mechanisch stabil am Zentralstab gehalten ist.

Bei einer vorteilhaften Ausgestaltung weist der Standfuß zur Bodenberührung eine Schutzkappe auf und ein Gehäuseteil, welches gehäusebildend für die Sekundärwicklung und den Zentralstab ist,
insbesondere wobei zwischen Zentralstab und Gehäuseteil Vergussmasse vorgesehen ist, so dass die Sekundärwicklung von Vergussmasse umgeben ist. Von Vorteil ist dabei, dass ein doppelter Schutz der Sekundärwicklung vorsehbar ist. Wenn also beispielsweise Flüssigkeit durch die gegebenenfalls defekte Schutzkappe und/oder das gegebenenfalls defekte Gehäuseteil eindringt, ist die Sekundärwicklung immer noch geschützt von der Vergussmasse.

Bei einer vorteilhaften Ausgestaltung ist am Rahmen des Fahrzeugs eine elektronische Schaltung angeordnet, welche eine mit der Sekundärwicklung in Reihe oder parallel zugeschaltete Kapazität aufweist, die derart dimensioniert ist, dass die zugehörige Resonanzfrequenz der Frequenz des in den Primärleiter eingeprägten Wechselstromes im Wesentlichen entspricht. Von Vorteil ist dabei, dass auch bei großem Luftspalt, also Übertragung der magnetischen Feldlinien durch Luft, ein hoher Wirkungsgrad erreichbar ist. Insbesondere ist auch in einem großen Luftabstandsbereich ein von dem Luftabstand nur wenig abhängiger Wirkungsgrad erreichbar.

Bei einer vorteilhaften Ausgestaltung ist der Zentralstab mittig im umwickelten Bereich angeordnet. Von Vorteil ist dabei, dass zwischen Zentralstab und Sekundärwicklung Ferrit anordenbar ist, so dass der Zentralstab im Wesentlichen abgeschirmt ist von den von der Sekundärwicklung erzeugten Magnetfeldern. Somit ist auch ein Material, wie Stahl, einsetzbar, das ansonsten hohe Wirbelstromverluste erzeugen würde. Auf diese Weise ist durch die hohe Festigkeit des Stahls eine entsprechend hohe Tragfähigkeit des Standfusses erreichbar.

Bei einer vorteilhaften Ausgestaltung ist der Zentralstand durch den umwickelten Bereich hindurchführt und/oder von Ferrit umgeben, insbesondere wobei zwischen Zentralstab und Sekundärwicklung Ferrit angeordnet ist,

insbesondere wobei am äußeren Umfang des Zentralstabs parallel zum Zentralstab Ferritstäbe angeordnet sind. Von Vorteil ist dabei, dass der Zentralstab abgeschirmt ist, solange die Ferritstäbe nicht in Sättigung betrieben werden, also der Primärleiterstrom unterhalb eines kritischen Wertes verbleibt.

Vorzugsweise werden die Ferritstäbe derart am äußeren Umfang des Zentralstabes angeordnet, dass zwischen Sekundärwicklung und Zentralstab in Umfangsrichtung von der Stabachse aus gesehen lückenlos Ferritmaterial angeordnet ist.

Vorzugsweise sind Ferritstäbe und Zentralstab im Wesentlichen gleich lang ausgebildet, insbesondere unterscheiden sich die Längen der Stäbe um weniger als zehn Prozent.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

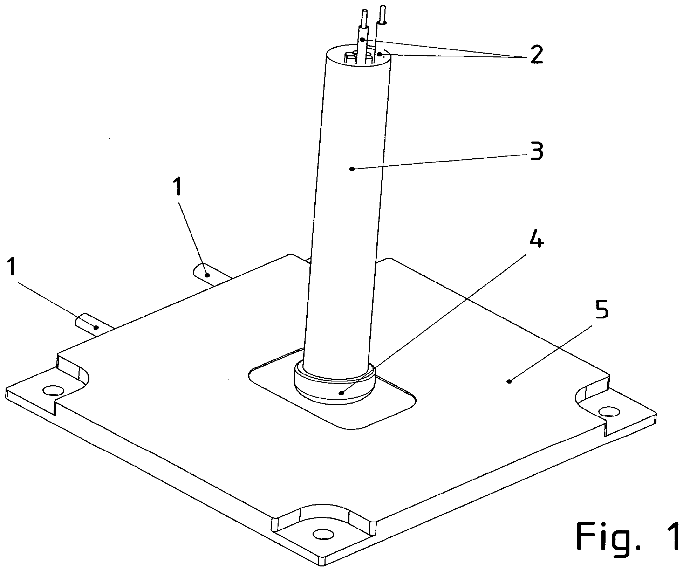

In der Figur 1 ist eine erfindungsgemäße Ladeanordnung für ein Fahrzeug mit aktivierbarem Standfuß für ein Zweirad in Schrägansicht gezeigt.

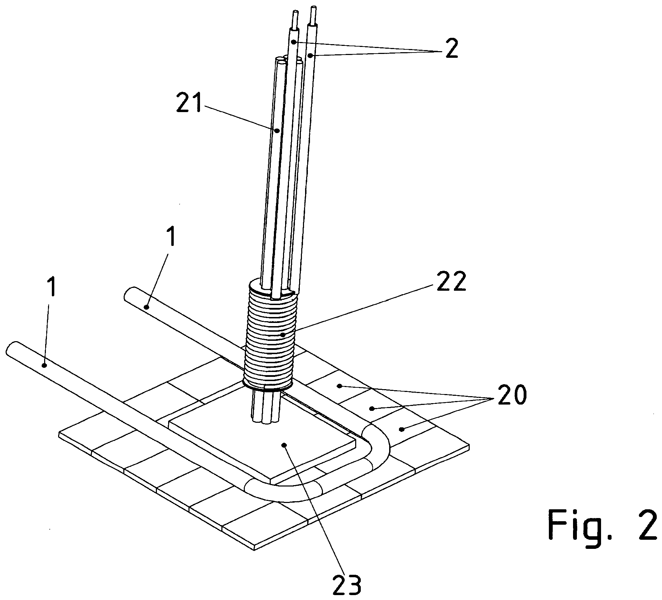

In Figur 2 sind Gehäuseteile ausgeblendet.

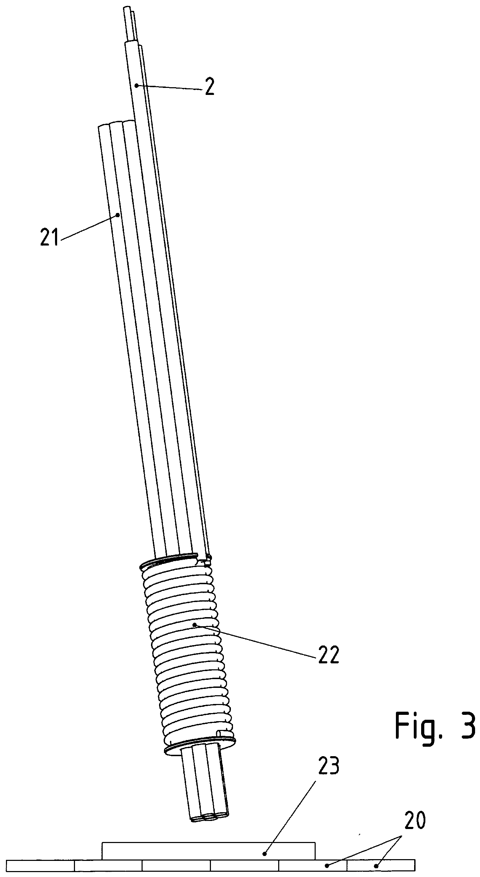

In Figur 3 ist eine zu Figur 2 zugehörige Seitenansicht gezeigt.

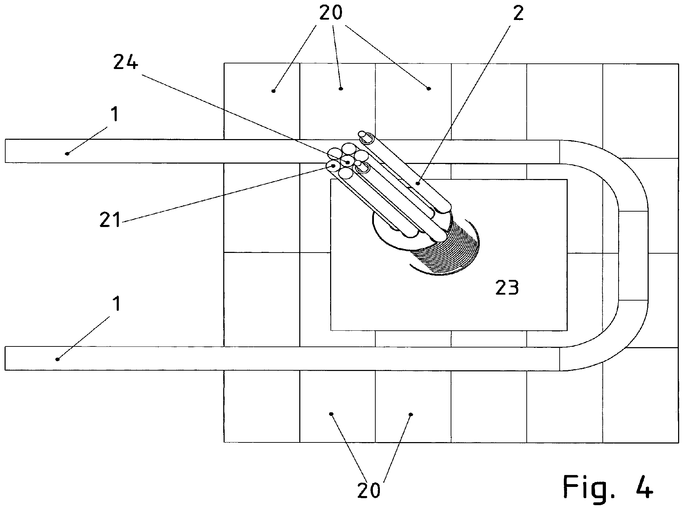

In Figur 4 ist eine zu Figur 2 gehörige Draufsicht gezeigt.

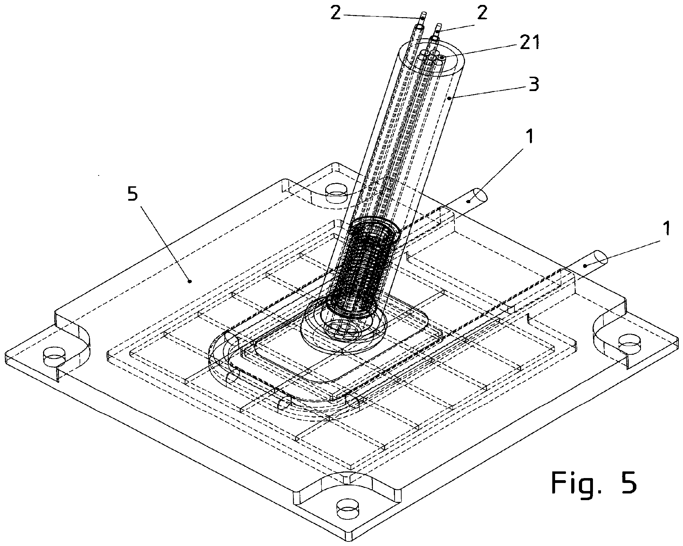

In Figur 5 ist eine transparente Darstellung der Anordnung gezeigt.

Bei dem System ist ein Primärleiter 1 im Boden verlegt, wobei der Primärleiter 1 in einer 180° Kurve verlegt ist. Unterhalb des Primärleiters 1 ist eine ebene Anordnung von Ferritplatten 20 angeordnet, so dass das vom bestromten Primärleiter erzeugte Magnetfeld nicht weiter in den Boden eindringen kann sondern seitlich des Primärleiters 1 austritt.

Innerhalb der Kurve ist auf der ebenen Anordnung von Ferritplatten 20 eine Ferritplatte 23 angeordnet. Somit ist die Ferritplatte 23 sozusagen als Spulenkern für die Primärleiterwindung, insbesondere Kurve, wirksam.

Das Fahrzeug ist beispielhaft als Einrad oder Zweirad ausgeführt. Am Fahrzeug ist ein Standfuß über ein Drehgelenk drehbar am Rahmen des Fahrzeugs angeordnet. Somit ist er mittels Drehbewegung aktivierbar und erhöht die Stabilität beim Abstellen des Fahrzeugs.

Der Standfuß weist ein röhrenartig ausgeprägtes Gehäuseteil 3 auf, an dessen Endbereich eine Schutzkappe 4 angeordnet ist, mittels derer die Bodenberührung stattfindet, also die Ableitung von Gewichtskraftanteilen des Fahrzeugs an den Boden.

Das Gehäuseteil 3 und die Schutzkappe 4 sind vorzugsweise aus einem Kunststoff gefertigt.

Der Standfuß wird vorzugsweise im Kurveninneren des Primärleiters beziehungsweise im vom Primärleiter umwundenen Bereich abgestellt.

Somit wird eine gute magnetische Ankopplung einer im Standfuß angeordneten Sekundärwicklung 22 erreicht. Deren Wicklungsachse ist in Standfußrichtung orientiert. Die Anschlussleitungen 2 zur Sekundärwicklung 22 werden fahrzeugseitig aus dem Standfuß zu einer Ladevorrichtung geführt, welche das Beladen eines Energiespeichers steuert oder ausführt. Dabei weist die Ladevorrichtung eine Kapazität auf, welche mit der Sekundärwicklung 22 derart in Reihe oder parallel zugeschaltet ist, dass die zugehörige Resonanzfrequenz im Wesentlichen der in den Primärleiter eingeprägten Wechselstromfrequenz entspricht. Vorzugsweise wird hier eine Mittelfrequenz verwendet, insbesondere aus dem Bereich zwischen 10 und 500 kHz.

Als Spulenkern für die Sekundärwicklung 22 sind Ferritstäbe 21 verwendet, die den Magnetfluss konzentrieren und durch das Innere der Sekundärwicklung 22 führen.

Mittig zwischen den Ferritstäben 21 ist ein Zentralstab 24 angeordnet, welcher nicht aus Ferrit sondern aus einem Metall oder Leichtmetall, wie Aluminium hergestellt ist.

Dieser Zentralstab 24 berührt die Innenwandung der Schutzkappe 4, so dass Kraftfluss durchleitbar ist von der Boden berührenden Schutzkappe 4 über den Zentralstab 24 bis zum anderen axialen Endbereich des Zentralstabes 24, welches mit dem Rahmen des Fahrzeugs verbunden ist.

Zum Schutz der Ferritplatten und des Primärleiters 1 ist oberhalb derselben eine überfahrbare Bodenabdeckung 5 angeordnet. Vorzugsweise ist im Bereich oberhalb der Ferritplatte 23 eine Vertiefung ausgeführt, so dass der für die induktive Kopplung optimale Bereich optisch erkennbar und/oder fühlbar ist. Zusätzlich sind auch farbliche oder sonstige Markierungen des optimalen Bereichs an der Bodenabdeckung 5 vorsehbar.

In einem weiteren erfindungsgemäßen Ausführungsbeispiel wird statt der in Kurve verlegten Primärleiteranordnung eine Primärwicklung mit einer Windungszahl 1 oder höher vorgesehen.

In einem weiteren erfindungsgemäßen Ausführungsbeispiel ist der Standfuß mittels linearem Bewegen aktivierbar, also anstatt der vorgenannten drehbaren Lagerung des Standfußes eine Linearlagerung.

In einem weiteren erfindungsgemäßen Ausführungsbeispiel ist die Schutzkappe 4 und der Zentralstab 24 als Verbundteil ausgeführt oder anderweitig stoffschlüssig verbunden.

In einem weiteren erfindungsgemäßen Ausführungsbeispiel ist das Gehäuseteil 3 und die Schutzkappe 4 nicht vorhanden, so dass nur der Zentralstab 24 direkte Bodenberührung aufweist. Dabei ist der dem Boden zugewandte axiale Endbereich des Zentralstabes 24 aufgeweitet, so dass die Flächenpressung bei Bodenberührung verringert ist.

In einem weiteren erfindungsgemäßen Ausführungsbeispiel ist die Sekundärwicklung insgesamt mittels Vergussmasse umgossen und vom Zentralstab 24 gehalten. Statt einer Vergussmasse ist auch ein Umspritzen mit Kunststoff ausführbar.

### Bezugszeichenliste

1 Primärleiter
2 Anschlussleitung
3 Gehäuseteil
4 Schutzkappe
5 Bodenabdeckung, überfahrbar
20 Ferritplatte
21 Ferritstäbe
22 Sekundärwicklung
23 Ferritplatte
24 Zentralstab

## Patentansprüche

1. Fahrzeug mit Energiespeicher,
wobei das Fahrzeug ein Einrad oder Zweirad ist,
wobei am Fahrzeug ein Standfuß zur Stabilisierung beim Abstellen des Fahrzeugs angeordnet ist
wobei der Standfuß eine Sekundärwicklung (22) aufweist, aus der dem Energiespeicher des Fahrzeugs Energie zuführbar ist,
wobei im von der Sekundärwicklung (22) umwickelten Bereich ein Zentralstab (24) zur Durchleitung von Kraft, also zur Durchleitung eines Anteils der Gewichtskraft des Fahrzeugs, angeordnet ist, **dadurch gekennzeichnet, dass** radial zwischen Zentralstab (24) und Sekundärwicklung (22) Ferritteile, also Ferritstäbe (21), angeordnet sind.

2. Fahrzeug nach mindestens einem der vorangegangenen Ansprüche,
**dadurch gekennzeichnet, dass**
der Zentralstab aus Stahl, insbesondere aus ferromagnetischem Stahl, oder Leichtmetall, wie Aluminium, gefertigt ist.

3. Fahrzeug nach mindestens einem der vorangegangenen Ansprüche,
**dadurch gekennzeichnet, dass**
der Standfuß drehbar und/oder linear bewegbar am Fahrzeug, insbesondere am Rahmen des Fahrzeugs angeordnet ist, so dass der Standfuß aktivierbar ist durch Drehen und/oder lineares Bewegen relativ zum Rahmen des Fahrzeugs.

4. Fahrzeug nach mindestens einem der vorangegangenen Ansprüche,
**dadurch gekennzeichnet, dass**
das Fahrzeug ein elektrisch angetriebenes Zweirad ist.

5. Fahrzeug nach mindestens einem der vorangegangenen Ansprüche,
**dadurch gekennzeichnet, dass**
der Zentralstab die Innenwandung einer Schutzkappe (4) berührt oder mittels des Zentralstabes der Boden berührbar ist, insbesondere im aktivierten Zustand des Standfusses.

6. Fahrzeug nach mindestens einem der vorangegangenen Ansprüche,
**dadurch gekennzeichnet, dass**
die Sekundärwicklung mittels Vergussmasse stoffschlüssig mit dem Zentralstab und/oder Ferritstäben verbunden ist.

7. Fahrzeug nach mindestens einem der vorangegangenen Ansprüche,
**dadurch gekennzeichnet, dass**
der Standfuß zur Bodenberührung eine Schutzkappe aufweist und ein Gehäuseteil, welches gehäusebildend für die Sekundärwicklung und den Zentralstab ist,
insbesondere wobei zwischen Zentralstab und Gehäuseteil Vergussmasse vorgesehen ist, so dass die Sekundärwicklung von Vergussmasse umgeben ist.

8. Fahrzeug nach mindestens einem der vorangegangenen Ansprüche,
**dadurch gekennzeichnet, dass**
am Rahmen des Fahrzeugs eine elektronische Schaltung angeordnet ist, welche ein mit der Sekundärwicklung in Reihe oder parallel zugeschaltete Kapazität aufweist, die derart dimensioniert ist, dass die zugehörige Resonanzfrequenz der Frequenz des in den Primärleiter eingeprägten Wechselstromes im Wesentlichen entspricht.

9. Fahrzeug nach mindestens einem der vorangegangenen Ansprüche,
**dadurch gekennzeichnet, dass**
der Zentralstab mittig im umwickelten Bereich angeordnet ist.

10. Fahrzeug nach mindestens einem der vorangegangenen Ansprüche,
**dadurch gekennzeichnet, dass**
der Zentralstab durch den umwickelten Bereich hindurchführt und/oder von Ferrit umgeben ist, insbesondere wobei zwischen Zentralstab und Sekundärwicklung Ferrit angeordnet ist, insbesondere wobei am äußeren Umfang des Zentralstabs parallel zum Zentralstab Ferritstäbe angeordnet sind.

11. Fahrzeug nach mindestens einem der vorangegangenen Ansprüche,
**dadurch gekennzeichnet, dass**
die Ferritstäbe derart am äußeren Umfang des Zentralstabes angeordnet sind, dass zwischen Sekundärwicklung und Zentralstab in Umfangsrichtung lückenlos Ferritmaterial angeordnet ist.

12. Fahrzeug nach mindestens einem der vorangegangenen Ansprüche,
**dadurch gekennzeichnet, dass**
Ferritstäbe und Zentralstab im Wesentlichen gleich lang ausgebildet sind, insbesondere unterscheiden sich die Längen der Stäbe um weniger als zehn Prozent.

## Claims

1. Vehicle comprising an energy storage device,
the vehicle being a unicycle or a bicycle,
a stand for stability when parking the vehicle being arranged on the vehicle,
the stand comprising a secondary winding (22) from which energy can be supplied to the energy storage device of the vehicle,
a central bar (24) for transmitting force, i.e. for transmitting a portion of the weight force of the vehicle, being arranged in the region around which the secondary winding (22) is wound, **characterised in that** ferrite parts, i.e. ferrite bars (21), are arranged radially between the central bar (24) and the secondary winding (22).

2. Vehicle according to the preceding claim,
**characterised in that**
the central bar is made of steel, in particular ferromagnetic steel, or of light metal such as aluminium.

3. Vehicle according to at least one of the preceding claims,
**characterised in that**
the stand is arranged on the vehicle, in particular on the vehicle frame, in a rotatable and/or linearly movable manner such that the stand can be activated by being rotated and/or linearly moved relative to the vehicle frame.

4. Vehicle according to at least one of the preceding claims,
**characterised in that**
the vehicle is an electrically powered bicycle.

5. Vehicle according to at least one of the preceding claims,
**characterised in that**
the central bar is in contact with the inner wall of a protective cap (4) or the ground can be contacted by means of the central bar, in particular when the stand is in the activated state.

6. Vehicle according to at least one of the preceding claims,
**characterised in that**
the secondary winding is integrally bonded to the central bar and/or ferrite bars by means of casting compound.

7. Vehicle according to at least one of the preceding claims,
**characterised in that**
the stand has a protective cap for contact with the ground, and a housing part, which forms a housing for the secondary winding and the central bar,
casting compound in particular being provided between the central bar and the housing part in such a way that the secondary winding is enclosed by casting compound.

8. Vehicle according to at least one of the preceding claims,
**characterised in that**
an electronic circuit is arranged on the vehicle frame, which circuit comprises a capacitor that is connected in series or parallel with the secondary winding and is of such dimensions that the associated resonance frequency substantially corresponds to the frequency of the alternating current impressed in the primary conductor.

9. Vehicle according to at least one of the preceding claims,
**characterised in that**
the central bar is arranged centrally in the region around which the winding is wound.

10. Vehicle according to at least one of the preceding claims,
**characterised in that**
the central bar is guided through the region around which the winding is wound and/or is surrounded by ferrite, ferrite in particular being arranged between the central bar and secondary winding, ferrite bars in particular being arranged on the outer circumference of the central bar in parallel with the central bar.

11. Vehicle according to at least one of the preceding claims,
**characterised in that**
the ferrite bars are arranged on the outer circumference of the central bar in such a way that ferrite material is arranged continuously in the circumferential direction between the secondary winding and the central bar.

12. Vehicle according to at least one of the preceding claims,
**characterised in that**
the ferrite bars and the central bar are substantially the same length, the lengths of the bars in particular differing by less than ten percent.

## Revendications

1. Véhicule équipé d'un accumulateur d'énergie,
lequel véhicule est muni d'une roue unique, ou de deux roues,
un montant de support étant disposé sur le véhicule, à des fins de stabilisation lors du remisage dudit véhicule,
ledit montant de support étant doté d'un enroulement secondaire (22) à partir duquel de l'énergie peut être délivrée audit accumulateur d'énergie du véhicule,
une tige centrale (24) étant implantée dans la région ceinturée par ledit enroulement secondaire (22), en vue du passage d'une force, c'est-à-dire du passage d'une partie de la force proportionnelle au poids dudit véhicule,
**caractérisé par le fait que**
des pièces en ferrite, plus précisément des barres de ferrite (21), sont interposées radialement entre la tige centrale (24) et l'enroulement secondaire (22).

2. Véhicule selon la revendication précédente,
**caractérisé par le fait que**
la tige centrale est fabriquée en acier, notamment en acier ferromagnétique, ou en un métal léger tel que l'aluminium.

3. Véhicule selon au moins l'une des revendications précédentes,
**caractérisé par le fait que**
le montant de support est installé avec faculté de mouvement(s) rotatoire et/ou linéaire sur le véhicule, en particulier sur le châssis dudit véhicule, de sorte que ledit montant de support peut être activé, par rotation et/ou par mouvement linéaire, par rapport audit châssis du véhicule.

4. Véhicule selon au moins l'une des revendications précédentes,
**caractérisé par le fait que**
ledit véhicule est un véhicule à deux roues, à entraînement électrique.

5. Véhicule selon au moins l'une des revendications précédentes,
**caractérisé par le fait que**
la tige centrale est en contact avec la paroi intérieure d'un capuchon protecteur (4), ou bien un contact peut être établi avec le sol au moyen de ladite tige centrale, en particulier à l'état activé du montant de support.

6. Véhicule selon au moins l'une des revendications précédentes,
**caractérisé par le fait que**
l'enroulement secondaire est raccordé matériellement, au moyen d'une masse de scellement, à la tige centrale et/ou aux barres de ferrite.

7. Véhicule selon au moins l'une des revendications précédentes,
**caractérisé par le fait que**
le montant de support comprend, en vue du contact avec le sol, un capuchon protecteur et une partie d'enveloppement qui forme un boîtier dévolu à l'enroulement secondaire et à la tige centrale,
sachant notamment qu'une masse de scellement est prévue, entre ladite tige centrale et ladite partie d'enveloppement, de telle sorte que ledit enroulement secondaire soit entouré par de la masse de scellement.

8. Véhicule selon au moins l'une des revendications précédentes,
**caractérisé par le fait**
**qu'**un circuit électronique, installé sur le châssis dudit véhicule, est pourvu d'un condensateur qui est connecté à l'enroulement secondaire, en série ou en parallèle, et est dimensionné de façon telle que la fréquence de résonance associée corresponde, pour l'essentiel, à la fréquence du courant alternatif injecté dans le conducteur primaire.

9. Véhicule selon au moins l'une des revendications précédentes,
**caractérisé par le fait que**
la tige centrale occupe une position centrée dans la région ceinturée.

10. Véhicule selon au moins l'une des revendications précédentes,
**caractérisé par le fait que**
la tige centrale traverse la région ceinturée et/ou est entourée de ferrite, de la ferrite étant notamment interposée entre ladite tige centrale et l'enroulement secondaire,
sachant notamment que des barres de ferrite sont placées sur le pourtour extérieur de ladite tige centrale, parallèlement à ladite tige centrale.

11. Véhicule selon au moins l'une des revendications précédentes,
**caractérisé par le fait que**
les barres de ferrite sont agencées, sur le pourtour extérieur de la tige centrale, de telle manière que du matériau à base de ferrite soit disposé dans le sens périphérique, sans discontinuité, entre l'enroulement secondaire et ladite tige centrale.

12. Véhicule selon au moins l'une des revendications précédentes,
**caractérisé par le fait que**
les barres de ferrite et la tige centrale sont réalisées avec longueurs sensiblement égales, sachant notamment que leurs longueurs diffèrent de moins de dix pour cent.
